# EUROPÄISCHE PATENTSCHRIFT

(11) **EP 2 163 534 B1**
(45) Veröffentlichungstag und Bekanntmachung des Hinweises auf die Patenterteilung: **22.10.2014**
(21) Anmeldenummer: 09161131.9
(22) Anmeldetag: 26.05.2009
(51) Int. Cl.: C04B 28/18

(54) **Porenbetonmaterial sowie verfahren zu seiner herstellung**
Porous concrete material and method for production of same
Matériau en béton poreux et son procédé de fabrication

(30) Priorität: 15.09.2008 DE 102008047160
(43) Veröffentlichungstag der Anmeldung: 17.03.2010
(73) Patentinhaber: Xella Technologie- und Forschungsgesellschaft mbH, 14797 Kloster Lehnin (DE)
(72) Erfinder: Straube, Berit Dr., 14822 Linthe (DE); Reimann, Ute, 03253 Doberlug-Kirchhain (DE)
(74) Vertreter: Solf, Alexander

(56) Entgegenhaltungen:
- EP-A- 1 688 401
- WO-A-98/02391
- DE-A1- 10 041 368
- DE-A1- 10 131 360
- DE-A1- 10 348 848
- DE-A1-102005 005 258
- DE-B4- 10 042 627
- DE-B4- 10 066 270
- GB-A- 2 405 402
- JP-A- 5 286 780
- HOMANN M.: 'Porenbeton Handbuch', 31 Dezember 2008, BUNDESVERBAND PORENBETON, BAUVERLAG GÜTERSLOH Seiten 11 - 86 * page 11 - page 18 * * page 81 - page 86 *
- LIPPE ET AL: "Waermeleitfaehigkeit von Porenbeton", FREIBERGER FORSCHUNGSHEFTE. A, LEIPZIG, DE, vol. 851, 1 January 1999 (1999-01-01), pages 224-229, XP008129532, ISSN: 0071-9390
- SCHLEGEL ET AL: "Porenbeton - die Entwicklung von Gefuege und Eigenschaften eines Werkstoffes", MAUERWERK, ERNST UND SOHN, DE, vol. 6, no. 3, 1 January 2002 (2002-01-01) , pages 82-88, XP008129934, ISSN: 1432-3427
- Huber, H.: "Konsequenzen der Substitution von Sand durch Flugasche bei der Gasbetonproduktion", 31 December 1984 (1984-12-31), Universität Erlangen-Nürnberg, Lehrstuhl III pages 1-82, * page 1 - page 11 * * page 69 - page 82 *
- ALLGEMEINE BAUAUFSICHTLICHE ZULASSUNG, no. Z-17.1-693, 28 February 2000 (2000-02-28), Dt. Institut für Bautechnik
- Anlage 1, Testergebnisse XELLA
- Temperatur-/Druck-/Zeitkurven, die vom Dritten III basierend auf Xella Patenten gezeichnet wurde
- SCHOCH, T.; STRAUBE, B.; STUMM, A.: "Dauerhaftigkeit von Porenbeton bei hoher CO2-Beaufschlagung", BAUPHYSIK, vol. 33, no. 5, 1 January 2011 (2011-01-01), pages 318-322, Berlin
- Daten und Kurve zu Druck-/Temperatur-/Zeitverläufen im Autoklav von verschiedenen Herstellern
- WALK-LAUFFER, B.: 'Untersuchung des Einflusses von Sulfaten auf das System CaO-SiO2-Al2O3-K2O-H2O mittels Wärmeflusskalorimetrie und in-situ Neutronenbeugung unter hydrothermalen Bedingungen', UNIVERSITÄT SIEGEN, SIEGEN

## Beschreibung

Die Erfindung betrifft ein hydrothermal gehärtetes Porenbetonmaterial sowie ein Verfahren zu seiner Herstellung.

Im Rahmen der vorliegenden Erfindung wird der Begriff "Porenbeton" für ein hydrothermal gehärtetes porosiertes Calciumsilikathydratmaterial verwendet, dessen Festigkeit im Wesentlichen aus der Bildung des Minerals Tobermorit im Hydrothermalprozess resultiert und das aus wässrigen Mischungen aus mindestens einem mineralischen Bindemittel mit mindestens einer im Hydrothermalprozess reaktionsfähigen CaO-Komponente wie z. B. Zement und/oder gebrannter Kalk oder Kalkhydrat und mindestens einem mineralischen Zuschlagstoff mit einer im Hydrothermalprozess reaktionsfähigen SiO₂-Komponente wie Quarzmehl sowie einem Gasbildner wie Aluminiumpulver oder Aluminiumpaste oder einem vorgefertigten Schaum hergestellt worden ist. (Für die mit Schaum hergestellten Produkte wird häufig auch der Begriff "Schaumbeton" verwendet.)

Die bekannten Porenbetonprodukte weisen als Baumaterial gute bauphysikalische Eigenschaften, insbesondere relativ hohe Druckfestigkeiten bei relativ geringer Rohdichte und relativ geringer Wärmeleitfähigkeit auf.

Porenbeton besteht im Wesentlichen aus einer Stegmatrix aus Calciumsilikathydratmaterial und Restquarzkörnern und/oder im Hydrothermalprozess inerten Gesteinsmehlkörnern, deren Stege die aus der Porosierung entstandenen bzw. erzeugten relativ großen Poren umgeben. Zudem weist die Stegmatrix eine Mikroporosität auf. (Im Folgenden wird für Calciumsilikathydrat auch die gebräuchliche Abkürzung CSH verwendet.)

Ziel vieler Weiterentwicklungen ist, die Wärmeleitfähigkeit weiter zu senken möglichst unter Beibehaltung der geforderten Normfestigkeiten und Rohdichten.

Beispielsweise befasst sich die DE 100 41 368 B4 unter anderem mit der Absenkung der Wärmeleitfähigkeit und der Rohdichte von Porenbeton. Es wird vorgeschlagen, eine Kornverteilung eines Zuschlagstoffes auszuwählen, die möglichst viele Gefügehohlräume mit Stützkörnern ausbildet, während im Verhältnis hierzu und zur Größe der Stützkörner eines Stützkorngefüges nur wenige Berührungspunkte der Stützkörner untereinander und damit nur wenige Wärmebrücken gebildet werden. Dies soll insbesondere dadurch gelingen, dass eine Grobkornfraktion mit einem engen Kornband verwendet wird, so dass die Größenunterschiede zwischen den einzelnen Körnern möglichst gering sind. Um eine gegenüber der Verwendung von Quarz weiter abgesenkte Wärmeleitfähigkeit zu erreichen, soll das grobe Stützkorngefüge des Zuschlagstoffs aus Mineralien oder Gesteinen ausgebildet werden, die bei ähnlichem Festigkeitsniveau eine geringere Wärmeleitfähigkeit besitzen als Quarz wie z. B. Kalkstein.

Eine gleiche Lehre ergibt sich aus der DE 100 66 270 B4. Auch bei dieser Erfindung wird die Festigkeit und Wärmeleitfähigkeit mit der Korngröße des Stützkorngefüges gesteuert eingestellt.

Nach der EP 1 892 226 A2 wird versucht, die Wärmeleitfähigkeit eines Porenbetonbausteins dadurch zu reduzieren, dass während der Herstellung einem oder mehreren Ausgangsmaterialien und/oder Zwischenprodukten Partikel eines mikro- oder nanoporösen Materials zugegeben werden. Genannt werden mikro- bzw. nanoporöse Kieselsäure oder Zeolith-Material. Diese Materialien sollen den Prozess des Autoklavierens schadlos überstehen und in die Matrix des Calcium-Silikat-Materials bzw. im hydrothermal gehärteten Baustein in seiner Grundmatrix eingebunden sein.

WO 98/02391 A beschreibt ein Porenbetonmaterial auf Basis von Calciumsilikathydrat aufweisend ein Feststoffgerüst, Mikroporen und Makroporen. Das Porenbetonmaterial weist z. B. eine Dichte von 480 kg/m³, eine Druckfestigkeit von 3,447 MPa auf. Die Wärmeleitfähigkeit liegt bei 0,09 W/mK. Bei der Herstellung des Porenbetonmaterials wird Quarzmehl mit einer spezifischen Oberfläche zwischen 7000 bis 12000 cm²/g verwendet.

Die EP 1 688 401 A2 beschreibt ein mineralisches, Calciumsilikathydrate als Gerüst und vom Gerüst umgebene Treibporen aufweisendes, aluminiumgetriebenes Dämmelement, das eine Wärmeleitfähigkeit von weniger als 0,045 W/mK aufweist. Die Druckfestigkeit der Dämmelemente liegt zwischen 0,2 und 0,4 N/mm². Bei der Herstellung der Dämmelemente kann ein Gesteinsmehl mit einer Feinheit zwischen 2000 und 5000 cm²/g und eine reaktionsfähige SiO₂-Komponente mit einer Feinheit von 5000 bis 12000 cm²/g verwendet werden.

Die GB 2 405 402 A beschreibt ein gehärtetes Calciumsilikathydratmaterial mit einer Wärmeleitfähigkeit von 0,02 bis 0,1 W/mK. Das gehärtete Produkt soll außerdem eine bestimmte Permeabilität und ein bestimmtes Röntgenbeugungsdiagramm aufweisen.

Die JP 05286780 A beschreibt einen Porenbeton, der mit einem Zement hergestellt wird, der eine spezifische Oberfläche zwischen 5000 und 11000 cm²/g aufweist. Die SiO₂-Komponente soll Partikelgrößen zwischen 2 und 7 µm haben.

Alle bisher bekannten Verfahren erreichen eine Reduzierung der Wärmeleitfähigkeit durch eine Verbesserung der Tragfähigkeit der Stege des Steggerüsts bzw. Steggefüges, wodurch die Rohdichte abgesenkt und dadurch auch die Wärmeleitfähigkeit verringert werden. Zum Beispiel wurde im Jahr 1998 normenmäßig ein Porenbeton der Rohdichte 350 kg/m³ für die Druckfestigkeitsklasse P2 (2,5 N/mm²) mit einem Rechenwert für die Wärmeleitfähigkeit von 0,09 W/mK eingeführt. Eine weitere Absenkung der Wärmeleitfähigkeit auf einen Rechenwert von z. B. 0,08 W/mK kann zwar durch eine weitere Reduzierung der Rohdichte auf z. B. 300 kg/m³ erzielt werden, dies geht aber zu Lasten der Druckfestigkeiten, indem nur noch Steindruckfestigkeiten bis 1,6 N/mm² erreicht werden können.

Aufgabe der Erfindung ist, ein kostengünstig herstellbares Porenbetonmaterial zu schaffen, das zumindest der Druckfestigkeitsklasse P2 (mindestens 2,5 N/mm² Steindruckfestigkeit) genügt und eine Wärmeleitfähigkeit von maximal 0,09 W/mK aufweist.

Die Erfindung sieht vor, das Steggerüst aus Calciumsilikathydratphasen mit über 50 M-% 11 Å-Tobermorit auszubilden und durch die hiermit einhergehenden Auflösungsprozesse nur einen Restquarzkorngehalt von maximal 10 Masse-% (im Folgenden wird die Abkürzung M-% statt Masse-% verwendet) zuzulassen. Normaler handelsüblicher Porenbeton weist im Steggerüst zwar auch 11 Å-Tobermorit auf, darüber hinaus aber immer Restquarzkörnergehalte weit über 10 M-%, in der Regel zwischen 25 und 35 M-%. Demgemäß liegen die Tobermoritgehalte entsprechend niedriger, und zwar in der Regel unter 55 M-%, während sie beim erfindungsgemäßen Porenbetonmaterial vorzugsweise über 55 M-%, insbesondere über 60 M-% liegen.

Im Rahmen der Erfindung wurde entgegen dem bisherigen Wissen festgestellt, dass die Restquarzkörner und/oder die Gesteinskörner eines Stützgefüges bzw. eines Stützgerüsts eine weitere Reduzierung der Wärmeleitfähigkeit verhindern. Erst die Verminderung der Quarzkörner unter 10 M-% im Steggefüge lässt es zu, Wärmeleitfähigkeiten unter 0,08 W/mK zu erwirken.

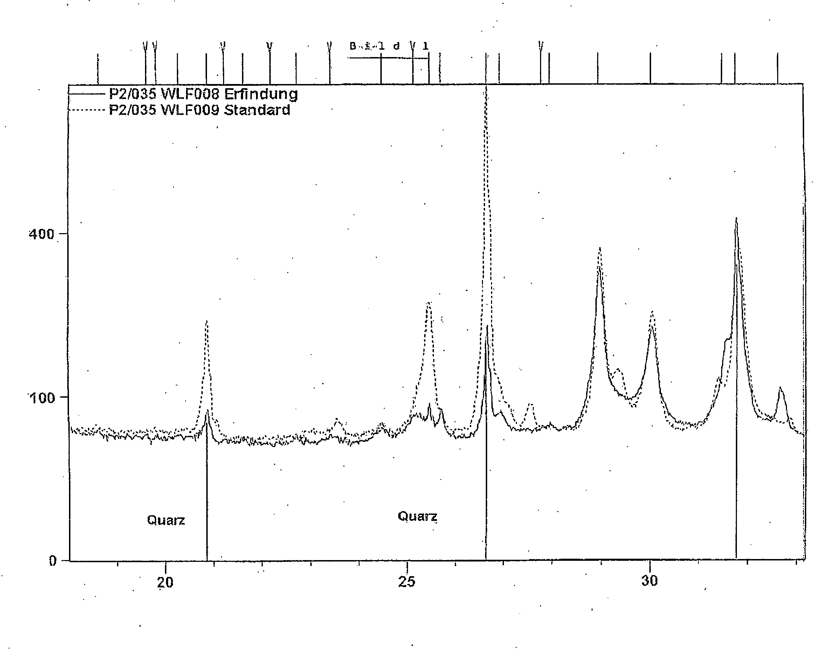

Bild 1 zeigt in einem Röntgenbeugungsdiagramm den Quarzgehalt eines handelsüblichen Porenbetonmaterials P2/035 mit einer gestrichelten Linie und den Restquarzgehalt eines erfindungsgemäßen Porenbetonmaterials P2/035 mit der durchgezogenen Linie).
Deutlich erkennbar ist, dass der Restquarzgehalt in einem erfindungsgemäßen Porenbetonmaterial weitaus geringer ist als in einem handelsüblichen Porenbetonmaterial.

Die Reduzierung des Restquarzkörnergehaltes sollte < 10, insbesondere < 8, vorzugsweise < 5 M-% sein.

Überraschend ist, dass das im Wesentlichen aus Calciumsilikathydratphasen mit über 50 M-% 11 Å-Tobermorit bestehende Steggefüge bzw. Steggerüst geringere Werte der Wärmeleitfähigkeit gewährleistet, obwohl das Kristallgefüge der CSH-Phasen relativ dicht ist und sehr viele Kontaktstellen aufweist. Geklärt ist dieses Phänomen noch nicht. Nach der Erfindung ist das Calciumsilikathydratsteggerüst mit den Restquarzkörnergehalten unter 10 M-% herstellbar, indem dafür gesorgt wird, dass die SiO₂-Komponente im Hydrothermalprozess vollständig bzw. nahezu vollständig (< 10 M-% Restquarzkörner) mit der CaO-Komponente zu Calciumsilikathydratphasen mit über 50 M-% zu sehr gut auskristallisiertem 11 Å-Tobermorit reagiert.

Die bekannten Calciumsilikathydratphasen CSH-I und/oder CSH-II können ebenfalls vorhanden sein. In jedem Fall sollte der 11 Å-Tobermorit hoher Kristallinität überwiegen (über 50 M-%).

Herstellungstechnisch wird dies erreicht durch empirisch zu ermittelnde Autoklavbedingungen und durch die Verwendung eines sehr feinen Quarzmehls als SiO₂-Komponente, das eine spezifische Oberfläche über 6000 cm²/g (gemessen nach Blaine) aufweist. Insbesondere sollte die Feinheit zwischen 8000 und 12000 cm²/g liegen. Mit kryptokristallinen Kieselsäuren, z. B. mit pyrogener Kieselsäure oder gefällter Kieselsäure oder mit Mikrosilika (amorphes SiO₂, das bei der Herstellung von Siliziummetallen aus Ferrosilizium entsteht), gelingt das nicht.

Zur Herstellung des erfindungsgemäßen Porenbetonmaterials werden z. B. die folgenden Bestandteile zusammengemischt (Angaben in M-%, bezogen auf die trockene Mischung):

| | |
|---|---|
| Quarzmehl (SiO₂-Gehalt 85 bis 100 M-%) | 25 bis 45 |
| | insbesondere 30 bis 40 |
| Gesteinsmehl | 0 bis 20 |
| | insbesondere 5 bis 15 |
| Zement insb. Portlandzement | 15 bis 45 |
| | insbesondere 30 bis 40 |
| Branntkalk | 0 bis 30 |
| (CaO-Gehalt 99 bis 80 M-%) | insbesondere 15 bis 25 |
| und/oder Kalkhydrat | 0 bis 20 |
| (CaO-Gehalt 50 bis 70 M-%) | insbesondere 0 bis 10 |
| Sulfatträger, z.B. | 0 bis 8 |
| Anhydrit (CaSO₄) | insbesondere 2 bis 6 |
| Porenbetonmehl | 0 bis 30 |
| (aus erfindungsgemäßer Produktion) | insbesondere 10 bis 20 |
| Porenbetonrückgut | 0 bis 20 |
| (aus erfindungsgemäßer Produktion) | insbesondere 2 bis 12 |
| Aluminiumkomponente oder Schaumkomponente (vorgemischt und untergemischt z. B. gemäß EP 0 816 303 B1) | 0,6 bis 0,7 |
| | Rohdichte: 40 bis 50 kg/m³ |

Die Erfindung sieht vor, als CaO-Komponente insbesondere Branntkalk mit im Autoklavprozess reagierenden CaO-Gehalten zwischen 80 und 99, insbesondere zwischen 93 und 96 M-% zu verwenden. Das verwendete Quarzmehl, das mengenmäßig als SiO₂-Komponente auf die CaO-Gehalte der CaO-Komponente abgestimmt ist, so dass eine vollständige bis nahezu vollständige Reaktion mit dem CaO der CaO-Komponente zu CSH-Phasen mit über 50 M-% 11 Å-Tobermorit im Autoklaven abläuft, weist eine spezifische Oberfläche gemessen nach Blaine über 6000 cm²/g, insbesondere über 7000 cm²/g, ganz besonders über 8000 cm²/g und z. B. SiO₂-Gehalte zwischen 85 und 100 M-% auf. Eine obere Feinheitsgrenze ist z. B. 12000 cm²/g, insbesondere 14000 cm²/g. Wenn zudem Gesteinsmehl verwendet wird, sollte dies zweckmäßigerweise die gleichen Blainewerte aufweisen. Der Sulfatträger (z.B. Anhydrit) wird mit üblicher Feinheit verwendet. Das Porenbetonmehl sollte eine Feinheit unter 1000 µm, insbesondere unter 750 µm aufweisen. Das Porenbetonrückgut stammt aus einer Vorproduktion zur Herstellung des erfindungsgemäßen Porenbetonmaterials, z. B. aus einem Sägeabfall.

Erfindungsgemäße gießfähige wässrige Mischungen aus den genannten Bestandteilen weisen Wasser-Feststoff-Werte zwischen 0,7 und 0,95, insbesondere zwischen 0,75 und 0,85 auf. Der Wasser-Feststoff-Wert bekannter Mischungen liegt meist bei 0,6.

Vorteilhaft ist, Porenbetonmehl und/oder Gesteinsmehl wie Kalksteinmehl, Rhyolithmehl oder Zeolithmehl gemeinsam mit dem Quarzmehl zuzugeben.

Die gießfähige Masse wird bezüglich ihrer Viskosität so eingestellt, dass sie ein Ausbreitmaß gemessen entsprechend DIN EN 12 350-5 zwischen 37 und 27, insbesondere zwischen 31 und 29 cm aufweist. Aufgrund dieser relativ niedrigen Viskosität ist in der Regel die Einbringung von Vibrations- oder Rüttelenergie in die in der Gießform befindliche Masse nicht erforderlich.

Die Masse ist vorzugsweise so eingestellt, dass sie in der Gießform schon nach Standzeiten zwischen 120 bis 170, insbesondere nach 130 bis 140 Minuten derart angesteift ist, dass sie wie üblich entformt und geschnitten werden kann.

Anschließend erfolgt das Autoklavieren unter für eine Porenbetonherstellung üblichen Autoklavbedingungen z. B. zwischen 6 und 10 Stunden.

Die autoklavierten z. B. als geschnittene Formkörper vorliegenden Porenbetonsteine weisen als Matrix das beschriebene Steggerüst aus Calciumsilikathydratphasen mit überwiegend, d. h. über 50 M-% aus 11 Å-Tobermorit hoher Kristallinität und einen Restquarzkörnergehalt unter 10 M-% auf, wobei die Wärmeleitfähigkeit 0,08 W/mK und weniger und die Steindruckfestigkeit mindestens 2,5 N/mm² betragen, insbesondere bei Rohdichten zwischen 300 und 400, vorzugsweise zwischen 320 und 380 kg/m³.

In der folgenden Tabelle sind Versuchsergebnisse aufgeführt. Hergestellt wurden Porenbetonsteine der Güteklasse P2/035 nach dem erfindungsgemäßen Verfahren, und es wurden die Restquarzgehalte sowie 11 Å-Tobermoritgehalte festgestellt. Die jeweilige Menge ist in M-% angegeben.

| Versuche | Tobermorit M-% * | Quarz M% * | Wärmeleitfähigkeit (W/mK) |
|---|---|---|---|
| GV06 | 63,4 | 2,9 | 0,0758 |
| GV07 | 68,9 | 2,8 | 0,0761 |
| GV08 | 62,7 | 2,6 | 0,0759 |
| W76 | 57,0 | 4,7 | 0,0754 |
| GV108 | 58,5 | 4,8 | 0,0756 |
| GV126 | 66,0 | 3,8 | 0,0761 |

| | | | |
|---|---|---|---|
| *berechnet nach der Rietveld-Analyse | | | |

Aus der Tabelle ergibt sich, dass überdurchschnittlich geringe Quarzgehalte zwischen 2,6 und 4,8 M-% erzielt werden konnten. Der Tobermoritgehalt lag relativ hoch zwischen 57,0 und 68,9 M-%. Die Versuchsprodukte wiesen eine Wärmeleitfähigkeit zwischen 0,075 und 0,076 W/mK auf.

## Patentansprüche

1. Hydrothermal gehärtetes Porenbetonmaterial in Form von als geschnittene Formkörper vorliegenden Porenbetonsteinen, aufweisend ein Feststoffsteggerüst, das Mikroporen aufweist und aus einem Schaum resultierende oder durch einen Treibprozess erzeugte Poren umgibt, wobei das Feststoffsteggerüst aus Calziumsilikathydrat-Phasen ausgebildet ist, über 50 Masse-% 11 Å-Tobermorit aufweist und bis zu 10 Masse-% Restquarzkörner enthält, wobei das Porenbetonmaterial eine Steindruckfestigkeit von mindestens 2,5 N/mm² und eine Wärmeleitfähigkeit von höchstens 0,09 W/mK aufweist und die Rohdichte zwischen 300 und 400 kg/m³ beträgt.

2. Porenbetonmaterial nach Anspruch 1,
**dadurch gekennzeichnet,**
**dass** es eine Wärmeleitfähigkeit von höchstens 0,08 W/mK aufweist.

3. Porenbetonmaterial nach einem oder mehreren der Ansprüche 1 und/oder 2,
**dadurch gekennzeichnet,**
**dass** die Rohdichte zwischen 320 und 380 kg/m³ beträgt.

4. Porenbetonmaterial nach einem oder mehreren der Ansprüche 1 bis 3, **dadurch gekennzeichnet,**
**dass** das Feststoffsteggerüst 11 Å-Tobermoritgehalte über 55, insbesondere über 60 Masse-% aufweist.

5. Porenbetonmaterial nach einem oder mehreren der Ansprüche 1 bis 4, **dadurch gekennzeichnet,**
**dass** der Restquarzkörnergehalt unter 8, insbesondere unter 5 Masse-% beträgt.

6. Verfahren zur Herstellung eines Porenbetonmaterials nach einem oder mehreren der Ansprüche 1 bis 5, wobei eine wässrige, gießfähige Mischung aus mindestens einer hydrothermal reagierenden CaO-Komponente und mindestens einer hydrothermal reagierenden SiO₂-Komponente, mindestens einem Treibmittel oder mindestens einem Schaum hergestellt, in Formen gegossen, zu einem Porenbetonkuchen ansteifen gelassen und der Porenbetonkuchen geschnitten wird, anschließend der geschnittene Porenbetonkuchen in einen Autoklaven verbracht und hydrothermal gehärtet wird,
**dadurch gekennzeichnet,**
**dass** als SiO₂-Komponente ein Quarzmehl mit einer spezifischen Oberfläche von mindestens 6000 cm²/g, gemessen nach Blaine, und Wasserfeststoffwerte zwischen 0,7 und 0,95 verwendet werden, wobei empirisch ermittelte hydrothermale Autoklavbedingungen angewendet werden, bei denen eine mengenmäßig auf die CaO-Gehalte der CaO-Komponente abgestimmte SiO₂-Komponent mit der CaO-Komponente zu Calciumsilikathydratphasen mit über 50 Masse-% 11 Å-Tobermorit reagiert und maximal 10 Masse-% Restquarzkörner verbleiben.

7. Verfahren nach Anspruch 6,
**dadurch gekennzeichnet,**
**dass** Quarzmehl mit einer spezifischen Oberfläche über 6000, insbesondere über 7000 cm²/g und bis maximal eine spezifische Oberfläche von 12000 bis 14000 cm²/g verwendet wird.

8. Verfahren nach Anspruch 6 und/oder 7,
**dadurch gekennzeichnet,**
**dass** Mischungen aus folgenden Bestandteilen hergestellt und hydrothermal gehärtet werden:
**Angaben in Masseprozent, bezogen auf die trockene Mischung**
| | |
|---|---|
| Quarzmehl (SiO₂-Gehal 85 bis 100 Masse-%) | 25 bis 45 |
| | insbesondere 30 bis 40 |
| Gesteinsmehl | 0 bis 20 |
| | insbesondere 5 bis 15 |
| Zement insb. Portlandzement | 15 bis 45 |
| | insbesondere 30 bis 40 |
| Branntkalk | 0 bis 30 |
| (CaO-Gehalt 99 bis 80 Masse-%) | insbesondere 15 bis 25 |
| und/oder Kalkhydrat | 0 bis 20 |
| (CaO-Gehalt 50 bis 70 Masse-%) | insbesondere 0 bis 10 |
| Sulfatträger, z.B. | 0 bis 8 |
| Anhydrit (CaSO₄) | insbesondere 2 bis 6 |
| Porenbetonmehl | 0 bis 30 |
| (aus erfindungsgemäßer Produktion) | insbesondere 10 bis 20 |
| Porenbetonrückgut | 0 bis 20 |
| (aus erfindungsgemäßer Produktion) | insbesondere 2 bis 12 |
| Aluminiumkomponente oder | 0,6 bis 0,7 |
| Schaumkomponente (vorgemischt und untergemischt z. B. gemäß EP 0 816 303 B1) | Rohdichte: 40 bis 50 kg/m³ |

9. Verfahren nach einem oder mehreren der Ansprüche 6 bis 8,
**dadurch gekennzeichnet,**
**dass** Wasserfeststoffwerte zwischen 0,75 und 0,85 verwendet werden.

10. Verfahren nach einem oder mehreren der Ansprüche 6 bis 9,
**dadurch gekennzeichnet,**
**dass** neben Quarzmehl Gesteinsmehl mit einer spezifischen Oberfläche nach Blaine von mindestens 6.000 cm²/g, insbesondere über 7000 cm²/g, und bis maximal eine spezifische Oberfläche von 12000 bis 14000 cm²/g verwendet wird.

11. Verfahren nach einem oder mehreren der Ansprüche 8 bis 10,
**dadurch gekennzeichnet,**
**dass** Porenbetonmehl mit einer Feinheit von < 1000, insbesondere von < 750 µm verwendet wird.

12. Verfahren nach einem oder mehreren der Ansprüche 6 bis 11,
**dadurch gekennzeichnet,**
**dass** die gießfähige Mischung bezüglich ihrer Viskosität so eingestellt wird, dass sie ein Ausbreitmaß zwischen 37 und 27, insbesondere zwischen 31 und 29 cm aufweist, gemessen entsprechend DIN EN 12 350-5.

## Claims

1. A hydrothermally hardened aerated concrete material in the form of aerated concrete blocks present as cut shaped bodies, comprising a solid skeleton which comprises micropores and surrounds pores resulting from a foam or produced by a blowing process, wherein the solid skeleton is made up of calcium silicate hydrate phases, comprises over 50 wt.% 11 Å tobermorite and contains up to 10 wt.% residual quartz grains, the aerated concrete material having a block compressive strength of at least 2.5 N/mm² and a thermal conductivity of no more than 0.09 W/mK and its bulk density being between 300 and 400 kg/m³.

2. The aerated concrete material according to claim 1,
**characterised in that**
it has a thermal conductivity of no more than 0.08 W/mK.

3. The aerated concrete material according to one or more of claims 1 and/or 2,
**characterised in that**
its bulk density is between 320 and 380 kg/m³.

4. The aerated concrete material according to one or more of claims 1 to 3,
**characterised in that**
the solid skeleton has 11 Å tobermorite contents of over 55 and in particular over 60 wt.%.

5. The aerated concrete material according to one or more of claims 1 to 4,
**characterised in that**
its residual quartz grain content is less than 8 and in particular less than 5 wt.%.

6. A method of producing an aerated concrete material according to one or more of claims 1 to 5, wherein an aqueous, pourable mixture of at least one hydrothermally reacting CaO component and at least one hydrothermally reacting SiO₂ component, at least one blowing agent or at least one foam is produced, poured into moulds, allowed to stiffen to form an aerated concrete cake and the aerated concrete cake is cut, and then the cut aerated concrete cake is placed in an autoclave and hydrothermally hardened,
**characterised in that** as SiO₂ component, a quartz flour having a specific surface area of at least 6000 cm²/g, measured according to Blaine, and water-solids ratios of between 0.7 and 0.95 are used, with empirically determined hydrothermal autoclave conditions being applied in which an SiO₂ component, the quantity of which has been adjusted to the CaO contents of the CaO component, reacts with the CaO component to form calcium silicate hydrate phases with over 50 wt.% 11 Å tobermorite and no more than 10 wt.% residual quartz grains remain.

7. The method according to claim 6,
**characterised in that**
quartz flour having a specific surface area of over 6000, in particular over 7000 cm²/g, and up to a maximum specific surface area of 12000 to 14000 cm²/g is used.

8. The method according to claim 6 and/or 7,
**characterised in that**
mixtures of the following constituents are produced and hydrothermally hardened:
**Data in mass per cent, based on the dry mixture**
| | |
|---|---|
| Quartz flour (SiO₂ content 85 to 100 wt.%) | 25 to 45 |
| | in particular 30 to 40 |
| Rock-flour | 0 to 20 |
| | in particular 5 to 15 |
| Cement, in particular Portland cement | 15 to 45 |
| | in particular 30 to 40 |
| Quicklime | 0 to 30 |
| (CaO content 99 to 80 wt.%) | in particular 15 to 25 |
| and/or hydrated lime | 0 to 20 |
| (CaO content 50 to 70 wt.%) | in particular 0 to 10 |
| Sulfate carrier, e.g. anhydrite | 0 to 8 |
| (CaSO₄) | in particular 2 to 6 |
| Aerated concrete flour (from production according to the invention) | 0 to 30 |
| | in particular 10 to 20 |
| Aerated concrete returns (from production according to the invention) | 0 to 20 |
| | in particular 2 to 12 |
| Aluminium component or | 0.6 to 0.7 |
| Foam component (pre-mixed and mixed in, e.g. according to EP 0 816 303 B1) | Bulk density: 40 to 50 kg/m³ |

9. The method according to one or more of claims 6 to 8, **characterised in that**
water-solids ratios of between 0.75 and 0.85 are used.

10. The method according to one or more of claims 6 to 9, **characterised in that**
in addition to quartz flour, rock flour having a specific surface area according to Blaine of at least 6,000 cm²/g, in particular over 7000 cm²/g, and up to a maximum specific surface area of 12000 to 14000 cm²/g is used.

11. The method according to one or more of claims 8 to 10, **characterised in that**
aerated concrete flour having a fineness of <1000, in particular of <750 µm, is used.

12. The method according to one or more of claims 6 to 11, **characterised in that**
the pourable mixture is adjusted in terms of its viscosity such that it has a flow diameter of between 37 and 27, in particular between 31 and 29 cm, measured in accordance with DIN EN 12 350-5.

## Revendications

1. Matériau de béton poreux durci de façon hydrothermique sous la forme de blocs de béton poreux se présentant en tant que corps moulés coupés, présentant une armature de barre solide qui présente des micropores et qui entoure des pores résultants d'une mousse ou produits par un processus de gonflement, dans lequel l'armature de barre solide est constituée de phases d'hydrate de silicate de calcium, présente plus de 50 % en masse de Tobermorit de 11 Å et jusqu'à 10 % en masse de grains de quartz résiduels, dans lequel le matériau de béton poreux présente une résistance à la compression d'au moins 2,5 N/mm² et une conductibilité thermique d'au plus 0,09 W/mK et la densité apparente se situe entre 300 et 400 kg/m³.

2. Matériau de béton poreux selon la revendication 1,
**caractérisé en ce que**
il présente une conductibilité thermique d'au plus 0,08 W/mK.

3. Matériau de béton poreux selon une ou plusieurs des revendications 1 et/ou 2,
**caractérisé en ce que**
la densité apparente se situe entre 320 et 380 kg/m³.

4. Matériau de béton poreux selon une ou plusieurs des revendications 1 à 3,
**caractérisé en ce que**
l'armature de barre solide présente une teneur en Tobermorit de 11 Å supérieure à 55 % en masse, en particulier supérieure à 60 % en masse.

5. Matériau de béton poreux selon une ou plusieurs des revendications 1 à 4,
**caractérisé en ce que**
la teneur en grains de quartz résiduels est inférieure à 8, en particulier inférieure à 5 % en masse.

6. Procédé de fabrication d'un matériau de béton poreux selon une ou plusieurs des revendications 1 à 5, dans lequel un mélange aqueux pouvant être coulé constitué d'au moins un composant de CaO réagissant de façon hydrothermique et d'au moins un composant de SiO₂ réagissant de façon hydrothermique, d'au moins un agent gonflant ou d'au moins une mousse est produit, versé dans des moules, se solidifie en un gâteau de béton poreux et le gâteau de béton poreux est coupé, ensuite, le gâteau de béton poreux coupé est placé dans un autoclave et durci de façon hydrothermique,
**caractérisé en ce que**
l'on utilise comme composants de SiO₂, une farine de quartz présentant une surface spécifique d'au moins 6000 cm²/g mesurée selon Blaine, et des valeurs d'hydrogène entre 0,7 et 0,95, dans lequel des conditions d'autoclavage hydrothermique déterminées empiriquement sont appliquées, dans lesquelles un composant de SiO₂ déterminé quantitativement sur la teneur en CaO des composants de CaO réagit avec le composant de CaO pour donner des phases d'hydrate de silicate de calcium avec plus de 50 % en masse de Tobermorit de 11 Å et il reste au maximum 10 % en masse de grains de quartz résiduels.

7. Procédé selon la revendication 6,
**caractérisé en ce que**
de la farine de quartz présentant une surface spécifique supérieure à 6000, en particulier supérieure à 7000 cm²/g, et une surface spécifique allant jusqu'à 12000 à 14000 cm²/g au maximum est utilisée.

8. Procédé selon la revendication 6 et/ou 7,
**caractérisé en ce que**
des mélanges constitués des composants suivants sont produits et sont durcis de façon hydrothermique :
Données en pourcentage en masse, par rapport au mélange sec
| | |
|---|---|
| Farine de quartz (teneur en SiO₂ 85 à 100 % en masse) | 25 à 45, en particulier 30 à 40 |
| Farine de roche | 0 à 20, en particulier 5 à 15 |
| Ciment, en part. ciment Portland | 15 à 45 |
| Chaux vive (teneur en CaO 99 à 80 % en masse) | 0 à 30, en particulier 15 à 25 |
| et/ou hydrate de chaux (teneur en CaO 50 à 70 % en masse) | 0 à 20, en particulier 0 à 10 |
| Support de sulfate, par exemple anhydrite (CaSO₄) | 0 à 8, en particulier 2 à 6 |
| Farine de béton poreux (issu de la production selon l'invention) | 0 à 30, en particulier 10 à 20 |
| Résidus de béton poreux (issu de la production selon l'invention) | 0 à 20, en particulier 2 à 12 |
| Composants d'aluminium ou | 0,6 à 0,7 |
| Composants moussants (prémélangé et mélangé intimement, par exemple selon le document EP 0 816 303 B1) | Densité apparente : 40 à 50 kg/m³ |

9. Procédé selon une ou plusieurs des revendications 6 à 8,
**caractérisé en ce que**
des valeurs d'hydrogène comprises entre 0,75 et 0,85 sont utilisées.

10. Procédé selon une ou plusieurs des revendications 6 à 9,
**caractérisé en ce que**,
outre de la farine de quartz, de la farine de roche présentant une surface spécifique selon Blaine d'au moins 6000 cm²/g, en particulier supérieure à 7000 cm²/g, et une surface spécifique allant jusqu'à 12000 à 14000 cm²/g au maximum est utilisée.

11. Procédé selon une ou plusieurs des revendications 8 à 10, **caractérisé en ce que**
une farine de béton poreux présentant une finesse < 1000, en particulier
< 750 µm est utilisée.

12. Procédé selon une ou plusieurs des revendications 6 à 11, **caractérisé en ce que**
la viscosité du mélange pouvant s'écouler est ajustée de telle sorte qu'il présente une consistance entre 37 et 27, en particulier entre 31 et 29 cm, mesurée selon la norme DIN EN 12 350-5.
